# EUROPEAN PATENT SPECIFICATION

(11) **EP 4 475 330 B1**
(45) Date of publication and mention of the grant of the patent: **02.12.2026**
(21) Application number: 23875162.2
(22) Date of filing: 27.09.2023
(51) Int. Cl.: H01M 50/591, H01M 50/588, H01M 50/503, H01M 50/517, H01M 50/204, H01B 5/02, H01B 7/29

(54) **BUSBAR ASSEMBLY INCLUDING FIREWALL, AND BATTERY PACK INCLUDING SAME**
SAMMELSCHIENENANORDNUNG MIT FIREWALL UND BATTERIEPACK DAMIT
ENSEMBLE BARRE OMNIBUS COMPRENANT UN PARE-FEU, ET BLOC-BATTERIE LE COMPRENANT

(30) Priority: 05.10.2022 KR 20220127380
(43) Date of publication of application: 11.12.2024
(73) Proprietor: LG Energy Solution, Ltd., Seoul 07335 (KR)
(72) Inventor: HWANG, Sung Tack, Daejeon 34122 (KR)
(74) Representative: Goddar, Heinz J.
(86) International application number: PCT/KR2023/014966
(87) International publication number: WO 2024/076098

(56) References cited:
- WO-A1-2016/199656
- CN-A- 108 242 602
- CN-A- 113 658 745
- CN-U- 210 576 493
- CN-U- 214 013 108
- KR-A- 20190 009 120
- KR-A- 20210 141 095
- KR-A- 20220 042 795

## Description

### [Technical Field]

This application claims the benefit of priority to Korean Patent Application No. 2022-0127380 filed on October 5, 2022.

The present invention relates to a busbar assembly including a firewall and a battery pack including the same. More particularly, the present invention relates to a busbar assembly capable of preventing introduction of flames between a busbar body and a heat-resistant member in the event of fire, thereby delaying ceramization of the heat-resistant member enclosing the busbar body, and a battery pack including the same.

### [Background Art]

An increasing number of devices are using lithium secondary batteries as an energy source, and lithium secondary batteries are also being applied to high-capacity and high-power devices. In order to supply high-capacity, high-power energy, the use of a battery module, in which a plurality of battery cells is electrically connected to each other, and a battery pack, in which battery modules are connected to each other in series and/or parallel, is also increasing.

In the battery module or the battery pack, a busbar is widely used as a means for electrical connection between battery cells and electrical connection between battery modules. The busbar is useful as a large current conduction means since the busbar is capable of allowing large current to stably flow therethrough even with a relatively small thickness compared to a cable.

In the busbar, a busbar body including copper and/or aluminum, which exhibits excellent electrical conductivity, is disposed inside, and electrical connection portions, through which electrical connection is formed, are disposed at opposite ends of the busbar body. The remaining part of the busbar, excluding electrical connection portions, is covered with a tube or an injection-molded product to ensure electrical insulation.

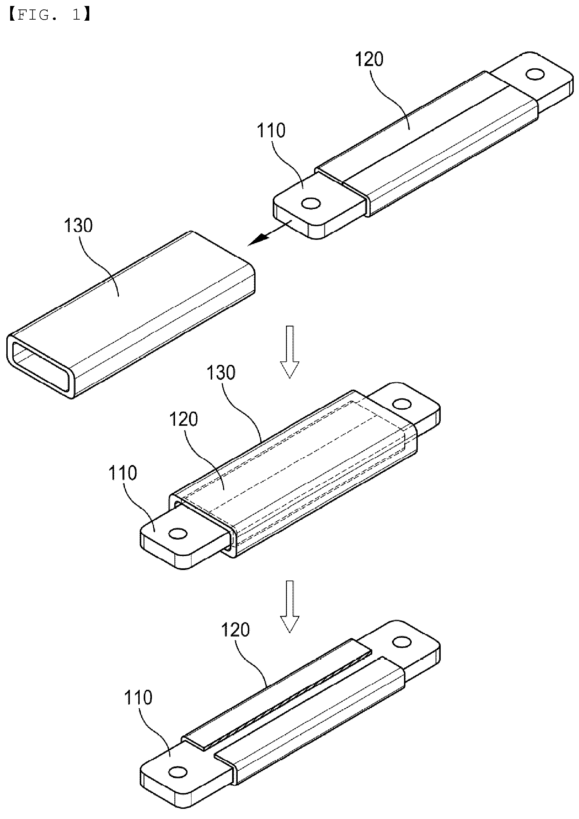

FIG. 1 is a perspective view showing a conventional busbar before and after being damaged by fire.

Referring to FIG. 1, the conventional busbar includes a busbar body 110 made of an electrically conductive material, an insulating tape 120 configured to enclose the remaining part of an outer surface of the busbar body 110, excluding opposite ends thereof, and a silicone tube 130 added to an outer surface of the insulating tape 120.

Electrical insulation of the busbar body 110 may be secured through the insulating tape 120 and the silicone tube 130, and the part of the busbar body 110 to which the insulating tape 120 and the silicone tube 130 are not added may be physically connected to another device so as to function as an electrical connection path.

Thermal energy generated when a battery cell ignites or explodes may be transferred to a battery cell adjacent thereto, whereby fire may spread. When the silicone tube 130 of the busbar connecting the battery modules is damaged by fire in the battery cell, the insulating tape 120 may open, whereby the busbar body 110 in the insulating tape may be exposed.

The exposed busbar body may come into contact with another battery pack structure, whereby short circuit may occur, and such internal short circuit may form an electrically closed circuit in the battery pack, which may accelerate thermal runaway in the battery pack.

Patent Document 1 discloses a busbar including a metal bar made of a metal material, a bandage member configured to enclose the remaining part of the metal bar, excluding opposite ends thereof, and an insulative tube configured to enclose both the metal bar and the bandage member.

In Patent Document 1, the bandage member provided on the surface of the metal bar remains attached to the surface of the metal bar even in the event of fire, whereby the metal bar does not directly contact a surrounding metal object, and therefore it is possible to prevent short circuit.

Patent Document 2 discloses a busbar including a busbar body made of a conductive metal and having two terminals formed thereon, an insulating member configured to cover the surface of a middle part of the busbar body between the two terminals, and an expandable graphite layer formed on the surface of the insulating member, the expandable graphite layer including thermally expandable graphite.

In the busbar of Patent Document 2, when the expandable graphite expands, the expandable graphite has a porous or foamy structure having microscopic gaps therein, and the expandable graphite functions as an insulating material. Consequently, the insulating member is prevented from being exposed to high-temperature gas, whereby it is possible to prevent the busbar body from being exposed due to thermal damage to the insulating member.

Patent Document 1 secures safety by preventing the metal bar from directly contacting a metal object in a high-temperature environment, and Patent Document 2 secures safety by preventing the busbar body from being exposed to a high-temperature environment. Even though the busbar is enclosed by the heat-resistant member or the expandable graphite, the heat-resistant member or the expandable graphite may be separated from the busbar body, whereby a gap may be generated between the busbar body and the heat-resistant member, or if a gap is generated as the expandable graphite is ceramized, the busbar body may be exposed. Consequently, the heat-resistant member or the expandable graphite may be used as a limited safety means against fire.

Therefore, there is a need for more improved technology capable of delaying exposure of the busbar body as much as possible, thereby securing safety. CN 113 658 745 A describes a busbar structure including a plurality of two-dimensional bus bars in parallel arrangement, mutually spaced apart by a plurality of flame-retardant partitions. Each bus bar comprises a base plate made of alloy cast iron, a number of copper wires welded on an outer surface of the base plate, and a heat shrink protection layer encompassing the outer surface of the base plate except for its opposing ends. Each partition includes flame retardant boards in parallel arrangement, mutually spaced apart by steel plate and insert plate. The bus bars are arranged in the gaps between the flame retardant boards. CN 210 576 493 U describes a busbar assembly for a surge protector, comprising a bus bar and a cover clamped together on a base. Contrary to the bus bar, the cover and the base are made of an electrically insulating material.

### (Prior Art Documents)

(Patent Document 1) Korean Patent Application Publication No. 2021-0141095 (2021.11.23)
(Patent Document 2) Japanese Patent Application Publication No. 2022-094702 (2022.06.27)

### [Disclosure]

### [Technical Problem]

The present invention has been made in view of the above problems, and it is an object of the present invention to provide a busbar assembly capable of delaying penetration of flames between a busbar body and a heat-resistant member when the busbar assembly is exposed to high temperatures, thereby delaying ceramization of the heat-resistant member.

### [Technical Solution]

A busbar assembly for a battery pack according to the present invention to accomplish the above object includes a busbar body having an electrical connection portion disposed at opposing ends thereof, a firewall coupled to an outer surface of the busbar body adjacent to the electrical connection portion, and a heat-resistant member surrounding the firewall and the outer surface of the busbar body excluding the electrical connection portion.

The firewall may be coupled to each of a first surface of the busbar body and a second surface of the busbar body, wherein the second surface of the busbar body is disposed opposite to the first surface.

The firewall is located at an end of the heat-resistant member.

The firewall may include a same material as the busbar body.

The firewall may include at least one material selected from the group consisting of aluminum, copper, nickel, or an alloy thereof.

The firewall may be coupled to the busbar body by laser welding.

The heat-resistant member may include at least one selected from the group consisting of a high heat-resistant silicone, polyphenylene sulfide, polyetheretherketone, polyphthalamide, polyamide, polysulfone, polyethersulfone, polyetherimide, an acrylic fiber, or polybenzimidazole.

The heat-resistant member is configured to undergo ceramization at 1,200°C or higher.

An outer surface of the firewall may include a slitted structure.

The electrical connection portion may include a through-hole for fastening of a coupling member.

The coupling member may be at least one of a bolt and nut, a bolt, a pin, or a rivet.

The present invention provides a battery pack including the busbar assembly.

The battery pack may include a battery pack housing receiving two or more battery modules, a pack frame accommodating the two or more battery modules in partitioned spaces thereof in order to fix positions of the two or more battery modules, and a busbar assembly configured to electrically connect the two or more battery modules to each other.

In addition, the present invention may provide various combinations of the above solving means.

### [Advantageous Effects]

As is apparent from the above description, in a busbar assembly according to the present invention, it is possible to prevent penetration of flames to a middle part of a heat-resistant member by the provision of a firewall even though a part of the heat-resistant material is damaged when the busbar assembly is exposed to high temperatures.

Since the time for the heat-resistant member to become ceramized at high temperatures is delayed, it is possible to delay penetration of flames through cracks formed in a ceramized part of the heat-resistant member.

Consequently, it is possible to minimize exposure of a busbar body to the outside in the event of fire, whereby it is possible to reduce the risk of short circuit.

### [Description of Drawings]

FIG. 1 is a perspective view showing a conventional busbar before and after being damaged by fire.
FIG. 2 is a see-through perspective view of a busbar assembly according to the present invention.
FIG. 3 is a vertical sectional view of the busbar assembly according to the present invention.
FIG. 4 is a vertical sectional view showing a process in which, when the busbar assembly is exposed to flames, introduction of the flames between a busbar body and a heat-resistant member is delayed.
FIG. 5 is a perspective view of a battery pack including the busbar assembly according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

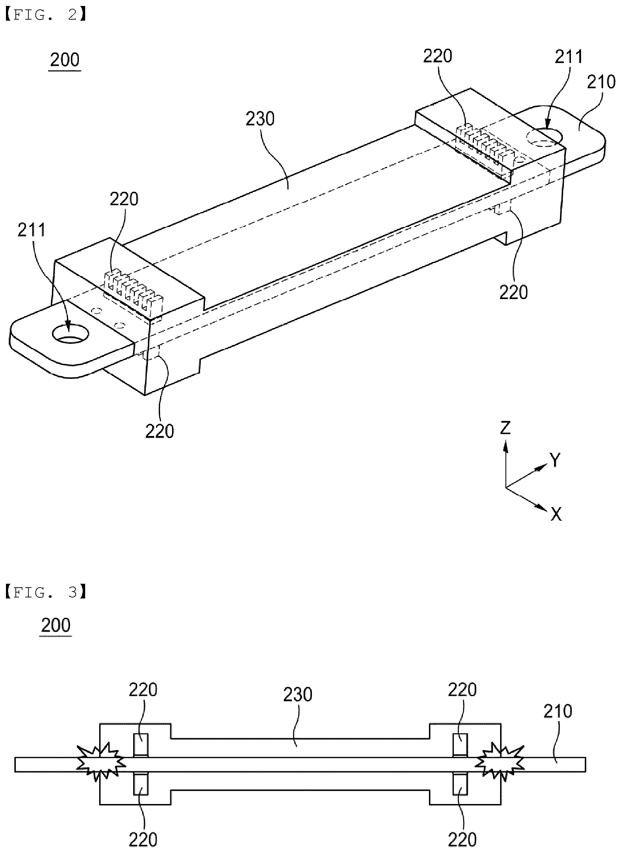

FIG. 2 is a see-through perspective view of a busbar assembly according to the present invention, and FIG. 3 is a vertical sectional view of the busbar assembly according to the present invention.

Referring to FIGs. 2 and 3, the busbar assembly 200 according to the present invention includes a busbar body 210 having an electrical connection portion formed at each end thereof, a firewall 220 coupled to an outer surface of the busbar body 210 so as to be adjacent to the electrical connection portion, and a heat-resistant member 230 added so as to enclose the firewall 220 and the outer surface of the busbar body 210 excluding the electrical connection portion.

The busbar assembly 200, which is a means configured to electrically connect electrical components spaced apart from each other, includes an inter-module busbar configured to connect battery modules disposed in a battery pack to each other.

In the busbar assembly, the length of the busbar body may be set in consideration of the distance between electrical components or battery modules to be electrically connected, and the width and thickness of the busbar body may be set in consideration of the amount of current that flows through the busbar body and the resistance of the busbar body.

Although the busbar body is shown as having a straight shape in the drawings of the present invention, the shape of the busbar may be configured in consideration of the positions of connectors of electrical components or battery modules to be electrically connected, and the busbar body may be formed so as to have any of various shapes, such as a shape in which the busbar body is bent upward or downward, an L-shape in which the busbar body is bent by 90 degrees in the plane, or a [-shape or a 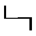 -shape in which the busbar body is bent by 90 degrees at opposite ends thereof in the plane. In addition, the busbar body may diverge at the middle thereof so as to have two or more electrical connection portions.

The firewall 220 is coupled to each of a first surface of the busbar body 210 and a second surface of the busbar body, which is opposite the first surface. In addition, the firewall 220 is located between the busbar body 210 and the heat-resistant member 230 at each end of the heat-resistant member 230. In FIGs. 2 to 4, the heat-resistant member 230 is shown as enclosing the entirety of the firewall 220. Alternatively, the heat-resistant member may be located only between the firewalls 220 at opposite ends.

The busbar body 210 may be made of a metal material that exhibits excellent electrical conductivity, for example, aluminum, nickel, copper, gold, silver, tin, zinc, and an alloy thereof.

Meanwhile, the firewall 220 may be made of the same material as the busbar body 210.

Specifically, the firewall 220 may be made of at least one material selected from the group consisting of aluminum, nickel, copper, gold, silver, tin, zinc, and an alloy thereof.

The firewall 220, which is a separate part that is separated from the busbar body 210, may be coupled to the busbar body 210 by laser welding. Alternatively, the firewall may be integrally formed with the busbar body when the busbar body is manufactured.

The heat-resistant member 230 may include at least one selected from the group consisting of heat-resistant silicone, polyphenylene sulfide, polyetheretherketone, polyphthalamide, polyamide, polysulfone, polyethersulfone, polyetherimide, acrylic fiber, and polybenzimidazole.

The heat-resistant member 230 is added so as to enclose an outer surface of the busbar body 210 to which the firewall 220 is coupled, and may be made of, for example, a heat-shrinkable tube. A heat-resistant tube configured to enclose and outer surface of the heat-resistant member 230 may be further added.

The heat-resistant member 230 may prevent exposure of the busbar body 210 and the firewall 220, thereby maintaining insulation thereof. When the heat-resistant member 230 is made of a material that is ceramized at high temperatures, however, the busbar body 210 may be exposed due to cracks caused by ceramization, whereby short circuit may occur.

Referring to FIG. 3, the parts of the heat-resistant member 230 in contact with the busbar body 210 at opposite ends of the heat-resistant member 230 are parts with the highest risk of flame penetration.

In the present invention, therefore, the firewall 220 is attached so as to be adjacent to each end of the heat-resistant member 230 in order to prevent flames from penetrating between the heat-resistant member 230 and the busbar body 210 in the event of fire, whereby it is possible to prevent flames from penetrating between the heat-resistant member 230 and the busbar body 210.

Since it is possible to prevent movement of flames to the heat-resistant member 230 added between the firewalls 220, as described above, it is possible to delay the time for a middle part of the heat-resistant member 230 to become ceramized and to reduce the risk of exposure of the busbar body 210, and therefore it is possible to provide a busbar assembly with improved safety.

The middle part of the heat-resistant member means a middle part of the heat-resistant member in a y-direction in FIG. 2.

The heat-resistant member 230 is a material that has the property of being ceramized at high temperatures. The heat-resistant member will be ceramized at 1,200°C or higher, optionally 1,500°C or higher.

Therefore, the heat-resistant member will be maintained in shape and will exhibit flame resistance below 1,200°C. At 1,200°C or higher, however, the heat-resistant member will be ceramized and cracked.

When a battery cell in the battery pack ignites and explodes and heat is transferred to the busbar coupled to the battery module, the heat-resistant member may be ceramized by the gas or flames discharged from the battery cell but may be maintained in shape.

Consequently, it is possible to prevent the conventional problem that the busbar body 110 is exposed due to destruction of the silicone tube 130 by fire when the silicone tube 130 is added to the outer surface of the busbar body, as shown in FIG. 1.

In a specific example, the outer surface of the firewall may include a slit-formed structure.

Referring back to FIG. 2, a part of the busbar body 210 is removed at the surface of the firewall 220 opposite the outer surface of the firewall in a direction in which the firewall is coupled to the busbar body 210, whereby slits are formed.

Alternatively, concave portions and convex portions may be alternately formed instead of the slits.

Although FIG. 2 shows a structure in which the slits are formed in the firewalls 220 on the first surface of the busbar body 210, which is the upper surface of the busbar body, firewalls 220 of the same shape as the firewalls 220 attached to the first surface may also be coupled to the second surface of the busbar body 210, which is the lower surface of the busbar body. The firewalls 220 attached to the second surface are coupled symmetrically to the firewalls 220 attached to the first surface with respect to the busbar body 210, and the firewall 220 includes a structure in which a part of the surface of the firewall opposite the outer surface of the firewall in a direction in which the firewall is coupled to the busbar body 210 is removed to form slits.

Since the outer surface of the firewall 220 is formed so as to be uneven, as described above, the surface area of the firewall may be increased, whereby the heat-resistant member 230 may be stably fixed.

In addition, when the concave portions are used at the time of coupling the firewall to the busbar body by laser welding, it is possible to easily secure coupling force at the time of welding.

The electrical connection portion includes a through-hole 211 for fastening of a coupling member. FIG. 2 shows the structure in which one through-hole 211 is formed in each end of the busbar body 210; however, two or more through-holes may be formed in each end of the busbar body.

For example, in order to achieve electrical connection between a plurality of battery modules mounted in the battery pack, the busbar assembly may be coupled to connectors of the battery modules. One of the through-holes 211 formed in the opposite ends of the busbar assembly may be connected to a connector of a first battery module, and the other through-hole may be connected to a connector of a second battery module. When a bolting operation using bolts and nuts is performed for connection with the connectors of the battery modules, the bolts may be inserted through the through-holes 211 and the nuts may be fastened to the bolts, whereby the busbar assembly may be connected to the first battery module and the second battery module.

Alternatively, the busbar assembly and the battery module connectors may be fixed to each other by inserting a pin including a catching portion into the through-hole 211, or the busbar assembly and the battery module connectors may be fixed to each other by fastening a rivet to the through-hole 211.

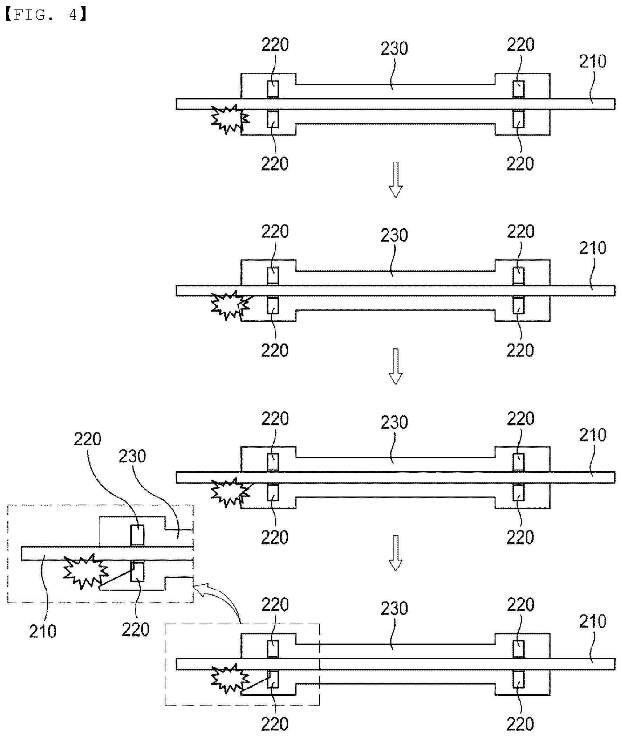

FIG. 4 is a vertical sectional view showing a process in which, when the busbar assembly according to the present invention is exposed to flames, introduction of the flames between the busbar body and the heat-resistant member is delayed.

Referring to FIG. 4, when flames occur on the left side of the busbar assembly, the part of the heat-resistant member 230 adjacent to the flames melts and starts to burn due to high heat. As the heat-resistant member 230 is gradually removed and the part of the heat-resistant member 230 attached to the outer surface of the firewall 220 is also burned down, the firewall 220 blocks the penetration of the flames, whereby it is possible to prevent further movement of the flames to the right side of the busbar assembly.

Consequently, it is possible to delay ceramization of the heat-resistant member 230 on the right side of the firewall 220 adjacent to the flames.

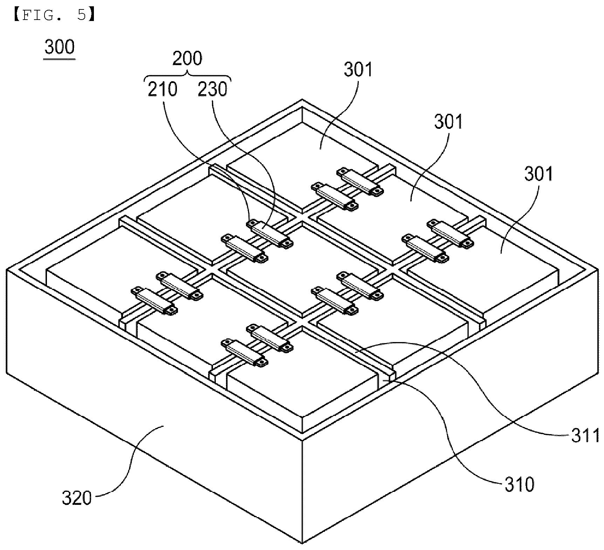

FIG. 5 is a perspective view of a battery pack including the busbar assembly according to the present invention.

Referring to FIG. 5, the battery pack 300 according to the present invention includes a battery pack housing 320 configured to receive two or more battery modules 301, a pack frame 310 configured to allow the battery modules 301 to be disposed in partitioned spaces thereof in order to fix the positions of the battery modules, and a busbar assembly 200 configured to electrically connect the battery modules 301 to each other, wherein the busbar assembly 200 is disposed such that a heat-resistant member 230 is disposed at an upper surface 311 of the pack frame 310, and electrical connection portions provided at opposite ends of the busbar body 210 to which the heat-resistant member 230 is not added are coupled to connectors of the battery modules 301.

Even though the pack frame 310 is made of an electrically conductive metal material, therefore, it is possible to secure insulation between the busbar assembly 200 and the pack frame 310 in a normal state of the battery pack 300 because the heat-resistant member 230 of the busbar assembly 200 and the pack frame 310 are disposed in contact.

However, when flames or high-temperature gas is discharged from a battery cell constituting the battery pack 300, whereby the temperature of the pack frame 310 is increased and flames occur, a firewall coupled to the outer surface of the busbar body 210 may block the movement of the flames, whereby ceramization of the heat-resistant member 230 is delayed, and therefore it is possible to maintain the insulation of the busbar body.

Meanwhile, even when the busbar assembly is not disposed at the upper surface of the pack frame 310 but is disposed so as to contact a component constituting the battery pack and made of an electrically conductive metal material, unlike what is shown in FIG. 5, insulation between the busbar assembly and the component made of the electrically conductive metal material may be maintained.

Those skilled in the art to which the present invention pertains will appreciate that various applications and modifications are possible within the category of the present invention based on the above description.

### (Description of Reference Numerals)

- 110, 210:: Busbar bodies
- 120:: Insulating tape
- 130:: Silicone tube
- 200:: Busbar assembly
- 211:: Through-hole
- 220:: Firewall
- 230:: Heat-resistant member
- 300:: Battery pack
- 301:: Battery module
- 310:: Pack frame
- 311:: Upper surface of pack frame
- 320:: Battery pack housing

## Claims

1. A busbar assembly (200) for a battery pack (300), the busbar assembly (200) comprising:
a busbar body (210) having an electrical connection portion disposed at opposing ends thereof;
a firewall (220) coupled to an outer surface of the busbar body (210) adjacent to the electrical connection portion;
a heat-resistant member (230) surrounding the firewall (220) and the outer surface of the busbar body (210) excluding the electrical connection portion,
wherein the firewall (220) is located at an end of the heat-resistant member (230), and
wherein the heat-resistant member (230) is configured to undergo ceramization at 1,200°C or higher.

2. The busbar assembly (200) according to claim 1, wherein the firewall (220) is coupled to each of a first surface of the busbar body (210) and a second surface of the busbar body (210), and
wherein the second surface of the busbar body (210) is disposed opposite to the first surface.

3. The busbar assembly (200) according to claim 1, wherein the firewall (220) includes a same material as the busbar body (210).

4. The busbar assembly (200) according to claim 1, wherein the firewall (220) includes at least one material selected from a group consisting of aluminum, copper, nickel, or an alloy thereof.

5. The busbar assembly (200) according to claim 1, wherein the firewall (220) is coupled to the busbar body (210) by laser welding.

6. The busbar assembly (200) according to claim 1, wherein the heat-resistant member (230) comprises at least one selected from a group consisting of a high heat-resistant silicone, polyphenylene sulfide, polyetheretherketone, polyphthalamide, polyamide, polysulfone, polyethersulfone, polyetherimide, an acrylic fiber, or polybenzimidazole.

7. The busbar assembly (200) according to claim 1, wherein an outer surface of the firewall (220) comprises a slitted structure.

8. The busbar assembly (200) according to claim 1, wherein the electrical connection portion comprises a through-hole (211) for fastening of a coupling member.

9. The busbar assembly (200) according to claim 8, wherein the coupling member is at least one of a bolt and nut, a bolt, a pin, or a rivet.

10. A battery pack (300) comprising:
a battery pack housing (320) receiving two or more battery modules (301);
a pack frame (310) accommodating the two or more battery modules (301) in partitioned spaces thereof in order to fix positions of the two or more battery modules (301); and
the busbar assembly (200) according to any one of claims 1 to 9, the busbar assembly (200) being configured to electrically connect the two or more battery modules (301) to each other.

## Patentansprüche

1. Sammelschienenanordnung (200) für einen Batteriepack (300), wobei die Sammelschienenanordnung (200) umfasst:
einen Sammelschienenkörper (210) mit einem elektrischen Verbindungsabschnitt, der an gegenüberliegenden Enden davon angeordnet ist;
eine Flammensperre (220), die mit einer Außenfläche des Sammelschienenkörpers (210) angrenzend an den elektrischen Verbindungsabschnitt gekoppelt ist;
ein hitzebeständiges Element (230), das die Flammensperre (220) und die Außenfläche des Sammelschienenkörpers (210) mit Ausnahme des elektrischen Verbindungsabschnitts umgibt,
wobei sich die Flammensperre (220) an einem Ende des hitzebeständigen Elements (230) befindet, und
wobei das hitzebeständige Element (230) so konfiguriert ist, dass es eine Keramisierung bei 1.200°C oder höher erfährt.

2. Sammelschienenanordnung (200) nach Anspruch 1, wobei die Flammensperre (220) mit jeder von einer ersten Oberfläche des Sammelschienenkörpers (210) und einer zweiten Oberfläche des Sammelschienenkörpers (210) gekoppelt ist, und
wobei die zweite Oberfläche des Sammelschienenkörpers (210) gegenüber der ersten Oberfläche angeordnet ist.

3. Sammelschienenanordnung (200) nach Anspruch 1, wobei die Flammensperre (220) das gleiche Material wie der Sammelschienenkörper (210) enthält.

4. Sammelschienenanordnung (200) nach Anspruch 1, wobei die Flammensperre (220) mindestens ein Material enthält, das aus einer Gruppe ausgewählt ist, die aus Aluminium, Kupfer, Nickel oder einer Legierung davon besteht.

5. Sammelschienenanordnung (200) nach Anspruch 1, wobei die Flammensperre (220) durch Laserschweißen mit dem Sammelschienenkörper (210) gekoppelt ist.

6. Sammelschienenanordnung (200) nach Anspruch 1, wobei das hitzebeständige Element (230) mindestens eines umfasst, das aus einer Gruppe ausgewählt ist, die aus einem hochhitzebeständigen Silikon, Polyphenylensulfid, Polyetheretherketon, Polyphthalamid, Polyamid, Polysulfon, Polyethersulfon, Polyetherimid, einer Acrylfaser oder Polybenzimidazol besteht.

7. Sammelschienenanordnung (200) nach Anspruch 1, wobei eine Außenfläche der Flammensperre (220) eine geschlitzte Struktur umfasst.

8. Sammelschienenanordnung (200) nach Anspruch 1, wobei der elektrische Verbindungsabschnitt ein Durchgangsloch (211) zur Befestigung eines Kopplungselements umfasst.

9. Sammelschienenanordnung (200) nach Anspruch 8, wobei das Kopplungselement mindestens eines von einem Bolzen und einer Mutter, einem Bolzen, einem Stift oder einem Niet ist.

10. Batteriepack (300), umfassend:
ein Batteriepackgehäuse (320), das zwei oder mehr Batteriemodule (301) aufnimmt;
einen Packrahmen (310), der die zwei oder mehr Batteriemodule (301) in getrennten Räumen davon aufnimmt, um Positionen der zwei oder mehr Batteriemodule (301) zu fixieren; und
die Sammelschienenanordnung (200) nach einem der Ansprüche 1 bis 9, wobei die Sammelschienenanordnung (200) so konfiguriert ist, dass sie die zwei oder mehr Batteriemodule (301) elektrisch miteinander verbindet.

## Revendications

1. Ensemble de barre omnibus (200) pour un bloc-batterie (300), l'ensemble de barre omnibus (200) comprenant :
un corps de barre omnibus (210) possédant une partie de connexion électrique disposée sur des bouts opposés de celui-ci ;
un pare-feu (220) couplé à une surface extérieure du corps de la barre omnibus (210) adjacent à la partie de connexion électrique ;
un élément résistant à la chaleur (230) entourant le pare-feu (220) et la surface extérieure de la barre omnibus (210), à l'exclusion de la partie de connexion électrique,
le pare-feu (220) étant situé à un bout de l'élément résistant à la chaleur (230), et
l'élément résistant à la chaleur (230) étant configuré pour subir une céramisation à une température de 1 200°C ou supérieure.

2. Ensemble de barres omnibus (200) selon la revendication 1, le pare-feu (220) étant couplé à chacune d'une première surface de la barre omnibus (210) et d'une deuxième surface de la barre omnibus (210), et
la deuxième surface du corps de la barre omnibus (210) étant disposée en face de la première surface.

3. Ensemble de barres omnibus (200) selon la revendication 1, le pare-feu (220) comprenant un même matériau que le corps de la barre omnibus (210).

4. Ensemble de barres omnibus (200) selon la revendication 1, le pare-feu (220) comprenant au moins un matériau sélectionné dans un groupe composé d'aluminium, de cuivre, de nickel, ou d'un alliage de ces derniers.

5. Ensemble de barres omnibus (200) selon la revendication 1, le pare-feu (220) étant couplé au corps de la barre omnibus (210) par soudage laser.

6. Ensemble de barres omnibus (200) selon la revendication 1, l'élément résistant à la chaleur (230) comprenant au moins un sélectionné dans un groupe composé des suivants : silicone à haute résistance à la chaleur, sulfure de polyphénylène, polyétheréthercétone, polyphtalamide, polyamide, polysulfone, polyéthersulfone, polyétherimide, une fibre acrylique, ou du polybenzimidazole.

7. Ensemble de barres omnibus (200) selon la revendication 1, une surface extérieure du pare-feu (220) comprenant une structure fendue.

8. Ensemble de barres omnibus (200) selon la revendication 1, la connexion électrique comprenant un orifice traversant (211) pour la fixation d'un élément de couplage.

9. Ensemble de barre omnibus (200) selon la revendication 8, l'élément de couplage étant au moins un des suivants : boulon et écrou, boulon, broche, ou rivet.

10. Bloc-batterie (300) comprenant :
un boîtier de bloc-batterie (320) recevant deux ou plusieurs modules de batterie (301);
un bâti de bloc (310) contenant les deux ou plusieurs modules de batterie (301) dans des espaces cloisonnés de celui-ci de façon à fixer des positions des deux ou plusieurs modules de batterie (301) ; et
l'ensemble de barre omnibus (200) selon une quelconque des revendications 1 à 9, l'ensemble de barre omnibus (200) étant configuré pour connecter électriquement l'un à l'autre les deux ou plusieurs modules de batterie (301).
